# FASCICULE DE BREVET EUROPEEN

(11) **EP 3 000 296 B1**
(45) Date de publication et mention de la délivrance du brevet: **30.08.2017**
(21) Numéro de dépôt: 15306474.6
(22) Date de dépôt: 22.09.2015
(51) Int. Cl.: A01B 63/24, A01B 71/02

(54) **MODULE DE TRAVAIL DU SOL AVEC UN DISPOSITIF DÉFLECTEUR MUNI D'UN MOYEN DE RÉGLAGE PERFECTIONNÉ ET MACHINE AGRICOLE PRÉSENTANT AU MOINS UN TEL MODULE**
BODENBEARBEITUNGSMODUL MIT EINER ABLENKVORRICHTUNG, DIE MIT EINEM PERFEKTIONIERTEN EINSTELLMITTEL AUSGESTATTET IST, UND LANDWIRTSCHAFTLICHE MASCHINE, DIE MIT MINDESTENS EINEM SOLCHEN MODUL AUSGESTATTET IST
SOIL-WORKING MODULE WITH A DEFLECTOR DEVICE PROVIDED WITH IMPROVED ADJUSTMENT MEANS AND AGRICULTURAL MACHINE HAVING AT LEAST ONE SUCH MODULE

(30) Priorité: 23.09.2014 FR 1458953
(43) Date de publication de la demande: 30.03.2016
(73) Titulaire: Kuhn-Huard S.A., 44142 Chateaubriant Cedex (FR)
(72) Inventeur: RUFFIER, Nicolas, 44110 SOUDAN (FR); AUDAS, Guillaume, 44110 CHATEAUBRIANT (FR)
(74) Mandataire: Nuss, Laurent

(56) Documents cités:
- US-A- 3 327 786
- US-A- 4 738 316
- US-A- 4 928 774
- US-A- 5 333 694
- US-A- 5 361 848
- US-A- 5 623 997

## Description

La présente invention se rapporte au domaine technique général du machinisme agricole et notamment aux machines agricoles destinées à travailler le sol. L'invention concerne, comme indiqué dans le préambule de la revendication 1, un module de travail du sol comportant une structure support, un dispositif de travail monté sur la structure support et au moins un dispositif déflecteur, ledit au moins un dispositif déflecteur est monté sur la structure support de manière déplaçable par rapport au dispositif de travail.

Un module de ce type est connu par le document US 5 623 997 pour fermer la fente dans le sol formée par la dent de fissuration. Le module de travail du sol comprend deux disques déflecteurs montés sur la structure support. Ils sont disposés de part et d'autre de la dent de fissuration et sont actifs derrière la dent de fissuration. Chaque disque déflecteur est mobile, c'est-à-dire que sa position par rapport à la dent de fissuration est réglable en position, par déplacement en translation dans les trois directions, suivant l'axe longitudinal, suivant l'axe transversal et suivant l'axe vertical. Le réglage suivant chaque axe est individuel et nécessite le démontage d'au moins un boulon. Pour modifier l'écartement entre le disque déflecteur et la dent de fissuration, l'utilisateur devra desserrer quatre écrous, déplacer transversalement le disque déflecteur et serrer les quatre écrous. Cette opération est répétée pour l'autre disque déflecteur. Le réglage suivant l'axe longitudinal et l'axe vertical nécessite également le démontage et le montage d'au moins un boulon par disque déflecteur. Ces différents réglages se font à l'aide d'au moins une clé de serrage. Ils sont donc relativement longs et pénibles à réaliser puisqu'ils requièrent beaucoup de manipulations. Les réglages doivent être effectués pour chaque module. Ainsi, pour une machine de travail du sol avec quatre modules, l'utilisateur devra faire huit réglages.

Sur d'autres modules de travail du sol, les réglages des dispositifs déflecteurs, par rapport au dispositif de travail, sont simplifiés puisqu'ils ne nécessitent pas un démontage complet du boulon. Néanmoins, chaque réglage doit être réalisé de manière séparée avec ou sans clé de serrage.

D'autres exemples de modules du même type, présentant les mêmes limitations en termes de complexité de mise en oeuvre des réglages, voire présentant des possibilités de réglage moins nombreuses, sont connus des documents US 3 327 786, US 5 361 848, US 4 738 316, US 4 928 774 et US 5 333 694.

Ainsi, par le document US 5 361 848 on connait un module de travail du sol selon le préambule de la revendication 1.

La présente invention a pour but de remédier aux inconvénients précités. Elle doit notamment proposer un module de travail du sol dont les réglages du ou des dispositif(s) déflecteur (s) associés (s) à chaque dispositif de travail sont plus faciles et rapides.

Ce but est atteint par l'invention pour un module de travail du sol selon le préambule de la revendication 1, grâce aux caractéristiques de la partie caractérisante de la revendication 1.

Ainsi et, en accord avec la partie caractérisante de la revendication 1, une importante caractéristique de l'invention consiste en ce qu'il est prévu un moyen de réglage pour régler ledit au moins un dispositif déflecteur en translation suivant un axe longitudinal, en translation suivant un axe transversal et en rotation autour d'un axe vertical. Ainsi, selon l'invention, un même moyen de réglage permet de réaliser un positionnement spatial complexe du dispositif déflecteur concerné par des réglages en translation selon deux axes perpendiculaires d'un plan (définissant ensemble, par exemple, un plan horizontal) et un réglage en rotation autour d'un troisième axe perpendiculaire audit plan. De plus, grâce au moyen de réglage, les manipulations se font sans outils additionnels et sans démontage. Les manipulations sont donc plus faciles et bien plus rapides pour adapter la position du dispositif déflecteur par rapport au dispositif de travail. Les manipulations sont également diminuées lorsque les réglages en translation et en rotation peuvent être effectués simultanément ou de manière sélective.

Préférentiellement, le moyen de réglage libère indépendamment les translations suivant un axe longitudinal et suivant un axe transversal et la rotation autour de l'axe vertical. Grâce à cet arrangement, le réglage de l'angle d'attaque demeure inchangé lorsqu'un réglage en translation est effectué.

Les revendications dépendantes 2 à 12 présentent d'autres caractéristiques et variantes de réalisations avantageuses de l'invention.

D'autres caractéristiques et avantages de l'invention se dégageront de la description qui va suivre en regard des dessins annexés qui ne sont donnés qu'à titre d'exemples non limitatifs de l'invention. Sur ces dessins :
- la figure 1 représente une vue de côté d'un module de travail du sol en position de travail conforme à l'invention,
- la figure 2 représente une vue arrière d'une machine de travail du sol comportant plusieurs modules de travail du sol selon l'invention,
- les figures 3 et 3A représentent une vue en perspective d'un moyen de réglage conforme à l'invention, selon deux variantes de réalisation partiellement différentes,
- les figures 4, 5 et 4A, 5A représentent une vue en coupe du moyen de réglage dans sa position verrouillée pour le travail,
- les figures 6, 7 et 6A, 7A représentent une vue en coupe du moyen de réglage dans sa position déverrouillée pour le réglage des translations,
- les figures 8, 9 et 8A, 9A représentent une vue en coupe du moyen de réglage dans sa position déverrouillée pour le réglage de la rotation,

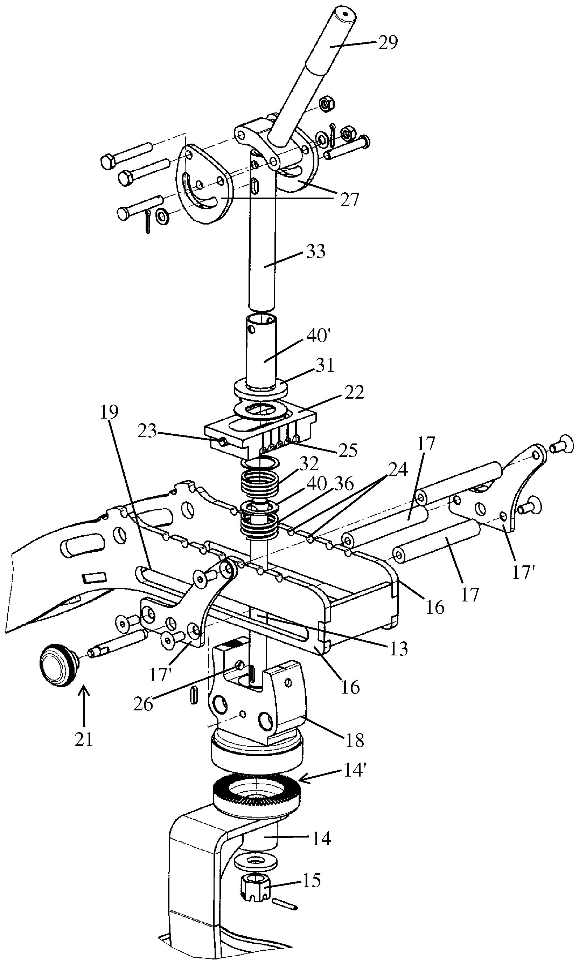

- la figure 10 est une vue éclatée du moyen de réglage représenté figure 3.

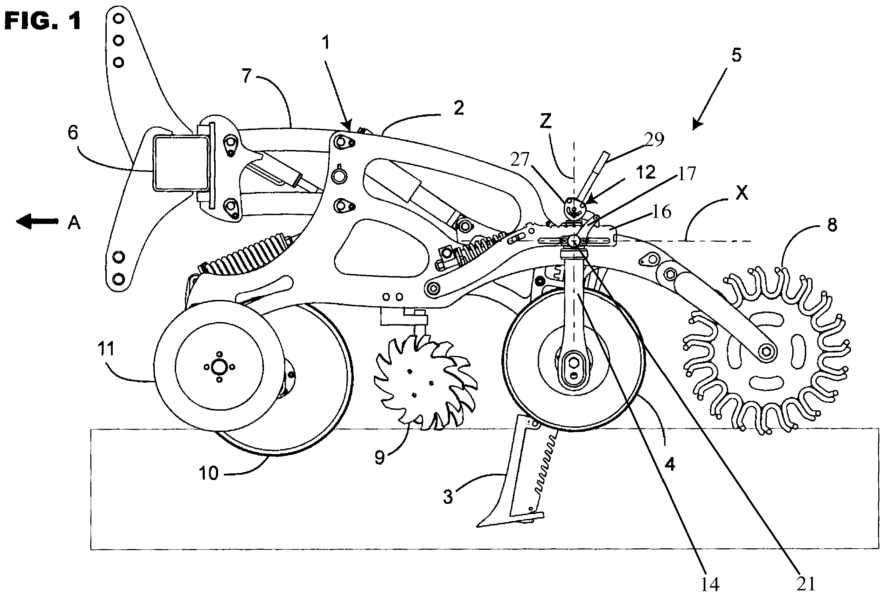

Sur la figure 1 apparaît un module de travail du sol (1) adapté pour un travail en profondeur sur une bande étroite de terre. L'action du module de travail du sol (1) est verticale et localisée à la future ligne de semis. La préparation du lit de semences se fait en bandes, des zones de terre travaillées alternent avec des zones où la portance et le couvert végétal sont conservés. Le module de travail du sol (1) comporte une structure support (2) sur laquelle est monté un dispositif de travail (3). Le dispositif de travail (3) réalise, par exemple, un travail de fissuration en profondeur qui favorise l'enracinement de la future plante. Le module de travail du sol (1) comporte également au moins un dispositif déflecteur (4) qui permet de canaliser la terre projetée par le dispositif de travail (3). Cette terre forme alors une butte de terre sur la bande travaillée.

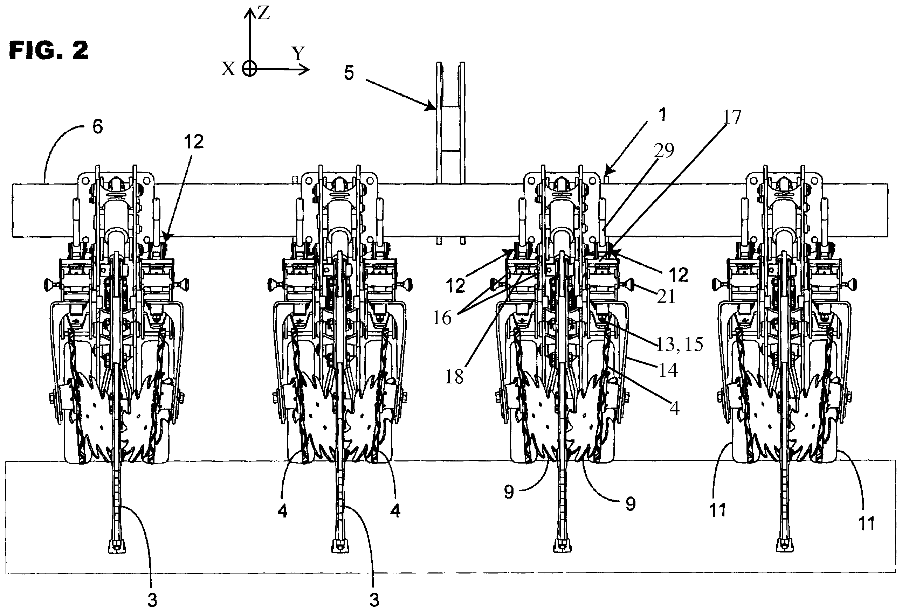

Dans l'exemple représenté sur la figure 2, le dispositif de travail (3) est une dent de fissuration et le dispositif déflecteur (4) est un disque déflecteur. La dent réalise un travail de fissuration par soulèvement du sol à l'avant de la dent et par sa chute derrière la dent. Le sol ainsi ameubli contribuera à un meilleur contact terre/graine. Ce travail de fissuration est effectué verticalement. La structure support (2) porte deux dispositifs déflecteur (4), un dispositif déflecteur (4) s'étend de chaque côté du dispositif de travail (3). Le disque permet de finir le travail de la dent en limitant les projections de terre dans l'inter-rang, le flux de terre est canalisé sur la bande travaillée pour confectionner la butte. Dans l'exemple de réalisation représenté, le disque comporte des ondulations qui permettent de fragmenter la terre. Dans des alternatives non représentées, le dispositif déflecteur (4) est une tôle ou un disque droit dépourvu d'ondulations et le dispositif de travail (3) est au moins un disque.

La figure 2 est une vue arrière d'une machine de travail du sol (5) permettant de travailler des bandes de terre, elle comporte quatre modules de travail du sol (1) selon l'invention. La machine de travail du sol (5) comporte une poutre transversale (6) qui s'étend transversalement sur laquelle sont bridés les modules de travail du sol (1). La poutre transversale (6) est destinée à être fixée à l'arrière d'un tracteur (non représenté). Le tracteur est amené à déplacer et à animer la machine de travail du sol (5) suivant un sens d'avance indiqué par la flèche (A) sur la figure 1 (direction perpendiculaire au plan de la figure 2). Dans la suite de la description, les notions suivantes "avant", "arrière" et "devant", "derrière" sont définies par rapport au sens d'avance (A) et les notions "droite" et "gauche" sont définies en regardant la machine de travail du sol (5), de l'arrière, dans le sens d'avance (A). Pour assurer un suivi précis du terrain, chaque module de travail du sol (1) est avantageusement monté sur la poutre transversale (6) par l'intermédiaire d'un parallélogramme (7), représenté sur la figure 1 à titre d'exemple. Une alternative non représentée consiste à fixer directement le module de travail du sol (1) sur la poutre transversale (6).

Grâce à la fixation par bridage des modules de travail du sol (1) sur la poutre transversale (6), l'écartement entre les bandes pourra être adapté en fonction des besoins de l'utilisateur. Généralement, l'écartement entre deux modules de travail du sol (1) voisin est adapté en fonction de la culture à implanter. Selon la largeur de la machine de travail du sol (5), la poutre transversale (6) est configurée en une ou plusieurs sections. Le nombre de modules de travail du sol (1) varient en fonction de la largeur de travail de la machine de travail du sol (5) et de l'écartement souhaité entre les bandes.

D'après la figure 1, le dispositif déflecteur (4) est fixé sur la structure support (2) de manière réglable par rapport au dispositif de travail (3). Le module de travail du sol (1) est ainsi capable de s'adapter aux différentes conditions, selon le type et la consistance du sol, pour une intervention en automne ou plutôt au printemps. Ainsi, le module de travail du sol (1) est polyvalent et s'adapte aux différents types de cultures telles que maïs, betterave, tournesol et colza. Pour compléter l'action du dispositif de travail (3) et des dispositifs déflecteurs (4), le module de travail du sol (1) comporte à l'arrière un rouleau (8). Ce rouleau (8) émiette et tasse la butte de terre crée par les dispositifs déflecteurs (4). Le rouleau (8) s'étend à l'arrière du dispositif déflecteur (4). Pour effectuer un nettoyage localisé de la bande de terre, un dispositif de nettoyage (9) est disposé devant le dispositif de travail (3). Le dispositif de nettoyage (9) a pour fonction de chasser ou de déplacer les débris dans l'inter-rang, c'est-à-dire de chasser les débris du rang travaillé. Le dispositif de nettoyage (9) est réalisé par une paire de chasse débris rotatifs. Le module de travail du sol (1) présente également à l'avant un disque (10) qui ouvre le sol et tranche les résidus. Le disque (10) représenté est un disque ouvreur droit, il pourra également être cranté et/ou ondulé. La profondeur de coupe du disque (10) est réglée par au moins une roue de jauge (11). Généralement, le disque (10) est associé à deux roues de jauge (11). Le module de travail du sol (1) regroupe donc une succession d'outils dont chacun est lié ou monté sur la structure support (2) de manière fixe ou réglable.

La figure 1 représente le module de travail du sol (1) dans une position de travail. Les différents outils se succèdent dans l'ordre suivant, compte tenu du sens d'avance (A) : le disque (10) avec les roues de jauge (11), le dispositif de nettoyage (9), le dispositif de travail (3), les dispositifs déflecteurs (4) et le rouleau (8). Ainsi, le module de travail du sol (1) réalise un travail qui est favorable à la prospection racinaire de la plante tout en limitant le volume de sol travaillé. Cette technique de travail en bandes ou connue sous le nom de « strip till », a donc des intérêts d'ordre agronomique et d'ordre économique. Seule une bande de terre de 15 à 20 cm de large est travaillée alors que le couvert végétal est maintenu au niveau de l'inter-rang pour limiter l'évaporation et l'érosion du sol. Un travail localisé en bandes est moins exigeant en puissance de traction et en consommation de carburant qu'un travail traditionnel. De plus, la bande de terre nettoyée et aérée va pouvoir profiter d'une vitesse de ressuyage et d'un réchauffement supérieure. La levée et le développement des graines est donc plus rapide puisque l'eau et les racines peuvent descendre sans obstacle.

Selon une caractéristique importante de l'invention, le module de travail du sol (1) comporte un moyen de réglage (12) pour régler ledit au moins un dispositif déflecteur (4) à la fois en translation suivant un axe longitudinal (X), en translation suivant un axe transversal (Y) et en rotation autour d'un axe vertical (Z). Grâce à ce moyen de réglage (12) unique et polyvalent, les manipulations se font sans outils additionnels et sans démontage de broche, goupille ou écrou, ledit moyen de réglage (12) faisant partie intégrante du module (1) considéré et pouvant être directement manipulé par l'utilisateur. Les manipulations sont donc plus faciles et bien plus rapides pour adapter la position du dispositif déflecteur (4) par rapport au dispositif de travail (3). Les manipulations sont également diminuées lorsque, selon une construction possible de l'invention, les réglages en translation et en rotation peuvent être effectués simultanément.

L'adaptation du dispositif déflecteur (4) par rapport au dispositif de travail (3) est donc bien plus facile et rapide. Le moyen de réglage (12) réalise selon l'invention notamment une fonction de serrage permettant d'assurer, de manière amovible ou libérable, un blocage ou un maintien d'une position déterminée du dispositif déflecteur (4) dans l'espace. Ce serrage est apte à résister aux efforts transmis au cours du travail, sans risque de déréglage, c'est-à-dire sans risque de modification de la position du dispositif déflecteur (4), le moyen de réglage (12) étant dans un état de serrage actif ou de blocage en position. La direction des axes (X, Y et Z) est indiquée comme respectivement longitudinale, transversale et verticale. La présente invention porte aussi sur un réglage dont l'un des axes (X, Y, Z) est dirigé sensiblement longitudinalement, sensiblement transversalement ou sensiblement verticalement.

Selon une autre caractéristique de l'invention, le moyen de réglage (12) sous forme de moyen de serrage permet de verrouiller, respectivement de déverrouiller, les translations suivant les axes (X et Y) et/ou la rotation suivant l'axe vertical (Z) du dispositif déflecteur (4). Grâce à cette caractéristique, lorsque le moyen de réglage (12) est déverrouillé, le dispositif déflecteur (4) peut être réglé dans l'espace. Les réglages en translation et en rotation sont réalisés sans outils supplémentaires. Le dispositif déflecteur (4) pourra ainsi être réglé très facilement pour être adapté aux conditions du terrain. Ainsi, le moyen de réglage (12) constitue un moyen de réglage avec blocage et verrouillage amovibles en position du dispositif déflecteur (4).

Préférentiellement, le moyen de réglage (12, 12A) comprend un organe (27, 29 ; 27A, 29A) unique permettant de verrouiller respectivement de déverrouiller les translations suivant les axes longitudinal (X) et transversal (Y) ou la rotation suivant l'axe vertical (Z) dudit au moins un dispositif déflecteur (4) et cet organe de verrouillage/déverrouillage (27, 29 ; 27A, 29A) du moyen de réglage (12, 12A) est avantageusement apte et destiné à libérer indépendamment les translations (X, Y) et la rotation autour de l'axe vertical (Z).

De manière avantageuse, l'organe de verrouillage/déverrouillage (27, 29 ; 27A, 29A) est pivotant, et apte et destiné à déterminer trois états pour ledit moyen de réglage (12, 12A), à savoir un état verrouillé et deux états de déverrouillage sélectif. Cet organe (27, 29 ; 27A, 29A) est conçu de telle manière qu'il puisse, à partir d'une position centrale ou médiane de verrouillage du moyen de réglage (12, 12A), pivoter dans un sens pour autoriser les mouvements de translation et pivoter dans l'autre sens pour autoriser le mouvement de rotation.Comme le montrent les figures annexées, il est avantageusement prévu que le moyen de réglage (12 ; 12A) comprenne plusieurs moyens de réglage élémentaires (14, 17, 18, 22) aptes et destinés chacun à permettre de réaliser au moins un réglage en translation selon l'un des axes longitudinal (X) et transversal (Y) ou en rotation autour de l'axe vertical (Z), et en ce que ledit moyen de réglage (12, 12A) comprend un unique organe (27, 29 ; 27A, 29A) assurant, de manière libérable, un verrouillage dans une position de réglage déterminée, en translation et en rotation, du dispositif déflecteur (4) concerné.

Afin d'aboutir à une solution compacte, autorisant un réglage complet en un endroit donné, les différents moyens de réglage élémentaires (14, 17, 18, 22) sont intégrés dans une même unité structurelle et fonctionnelle laquelle assure un montage réglable du dispositif déflecteur (4) concerné sur la structure support (2), l'organe de verrouillage unique (29, 29A ; 27, 27A) associé à ladite unité (et faisant partie de cette dernière) étant apte et destiné à réaliser, d'une part, un verrouillage avec blocage en position du dispositif déflecteur (4) et, d'autre part, un déverrouillage sélectif d'au moins un desdits moyens de réglage élémentaires (14, 17, 18, 22), par simple déplacement dudit organe par l'utilisateur.

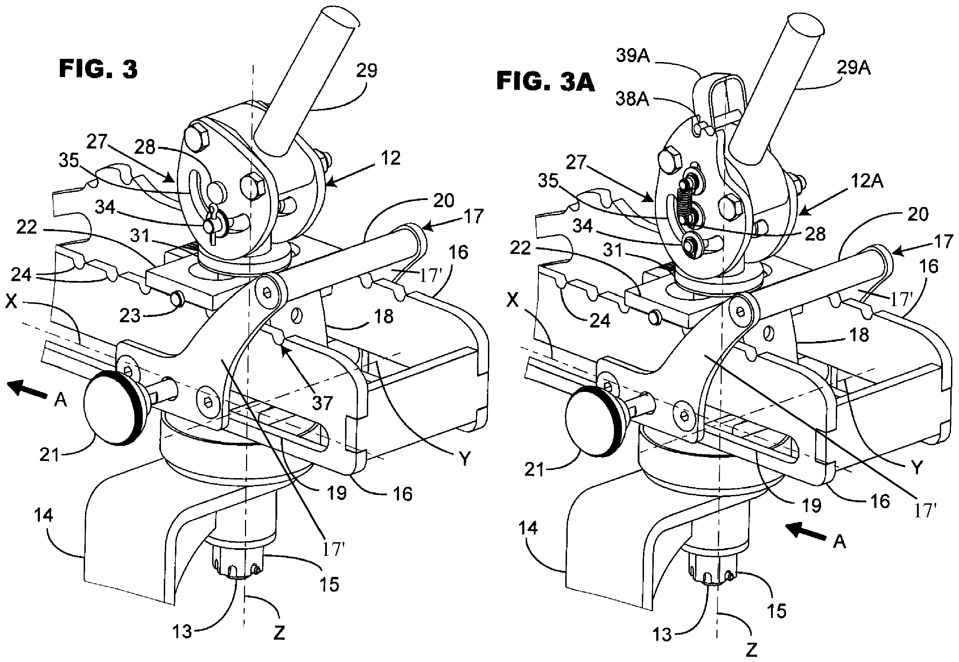

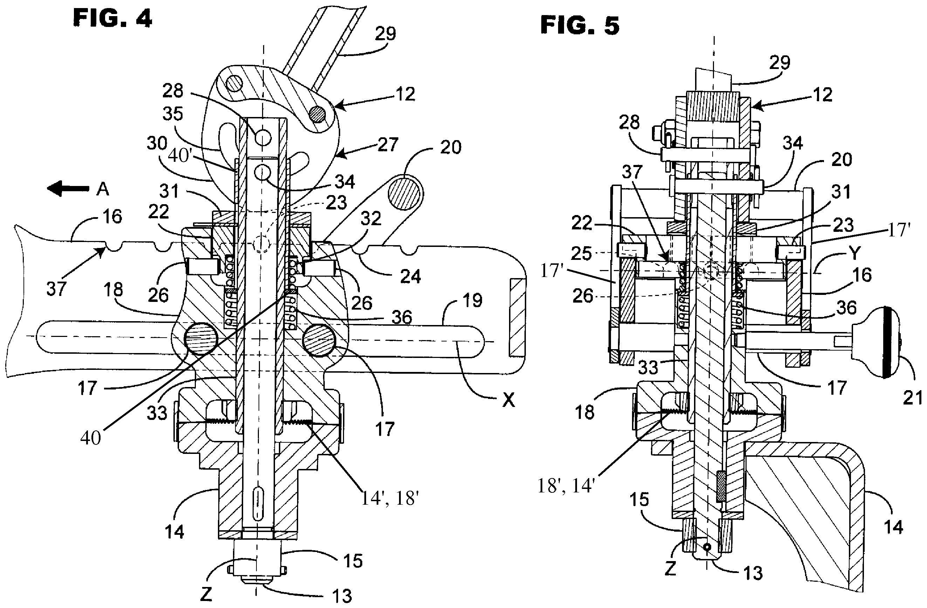

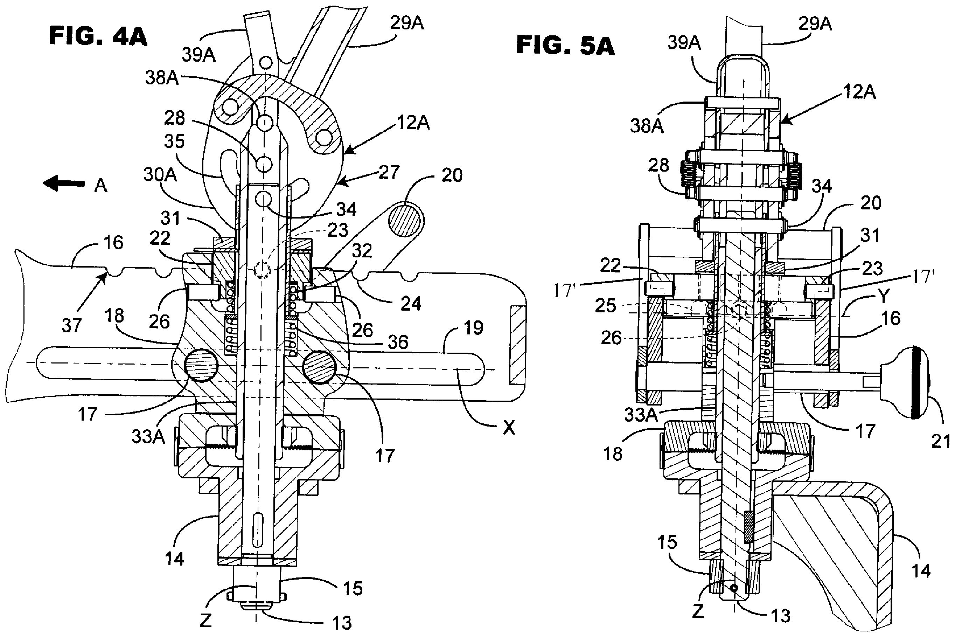

La figure 3 représente une vue isométrique d'un moyen de réglage (12) selon un exemple de réalisation dans sa position verrouillée. Les figures 4 à 9 sont des représentations en coupe du moyen de réglage (12) dans différentes positions du moyen de réglage (12). Le dispositif déflecteur (4) est monté sur un arbre (13) dirigé sensiblement verticalement (en position de travail de la machine (1), son orientation correspond à l'axe vertical (Z). Le dispositif déflecteur (4) est monté à l'extrémité inférieure de l'arbre (13) au moyen d'un support (14). Le support (14) est fixé sur l'arbre (13) via un écrou (15).

En accord avec un mode de réalisation constructive pratique de l'invention, représenté aux dessins annexés, ledit au moins un dispositif déflecteur (4) est monté sur un arbre vertical (13) définissant l'axe vertical (Z) de rotation et en ce que le moyen de réglage (12, 12A) comporte : i) un premier chariot (17) guidé en translation dans des bras (16) reliés rigidement à la structure support (2) et définissant l'axe de translation longitudinal (X), ii) un second chariot (18) logeant l'arbre (13) monté dans le chariot longitudinal (17) et apte à se déplacer transversalement par rapport à ce dernier, selon l'axe transversal (Y), iii) un crabot (22) permettant de positionner, avec verrouillage amovible, les premier et second chariots (17 et 18) respectivement selon l'axe longitudinal (X) et l'axe transversal (Y), et iiii) un support (14) portant le dispositif déflecteur (4), solidaire de l'extrémité inférieure de l'arbre vertical (13) et pouvant être sélectivement assujetti et libéré en rotation par rapport au chariot transversal (18), ces éléments (14, 17, 18, 22) formant des moyens de réglage élémentaires indépendants pouvant être sélectivement verrouillés et déverrouillés par un unique organe (27, 29 ; 27A, 29A) faisant également partie dudit moyen de réglage (12 ; 12A).

On peut remarquer que chacun de ces moyens de réglage élémentaires peut être directement manipulé par l'utilisateur sans outil.

Ainsi, afin de réaliser les différents réglages, chaque moyen de réglage (12) comporte deux bras ou rails (16), sous forme de plaques allongées espacées sur les figures annexées, fixés sur la structure support (2) par une extrémité et entre lesquels sont amenés à se déplacer un chariot longitudinal (17) et un chariot transversal (18). L'arbre (13) est destiné à être monté sur le chariot transversal (18). Le chariot longitudinal (17) permet de guider la translation selon l'axe longitudinal (X) et le chariot transversal (18) permet de guider la translation selon l'axe transversal (Y). Chaque bras (16) est muni d'une rainure droite (19) sensiblement horizontale. Le chariot longitudinal (17), placé entre les deux bras (16), se déplace dans ces rainures (19) pour le réglage selon l'axe longitudinal (X), en étant guidé en translation par des doigts transversaux (17") circulant dans ces rainures (19) et solidaires des bras latéraux (17') du chariot (17). Dans le cadre de la construction préférentielle représentée, ces doigts (17") relient rigidement entre eux les bras latéraux opposés (17') du chariot (17) et coulissent chacun simultanément dans les deux rainures (19). Pour faciliter ce réglage en translation, le chariot longitudinal (17) est équipé d'une poignée (20). Le chariot transversal (18) est monté sur le chariot longitudinal (17) et est susceptible de se déplacer transversalement par rapport au chariot longitudinal (17). Pour faciliter le réglage en translation selon l'axe transversal (Y), le chariot transversal (18) est équipé d'un bouton de manipulation (21), par exemple sous la forme d'une tige reliée rigidement au chariot (18), s'étendant à travers l'un des bras (16) et pourvue d'un pommeau. Le moyen de réglage (12) comporte un crabot (22) qui permet de régler et de verrouiller d'une part la position du chariot longitudinal (17) par rapport aux bras (16) et la position du chariot transversal (18) par rapport au chariot longitudinal (17). Le crabot (22) possède à cet effet, deux pions (23) destinés à se positionner dans l'un des crans (24) respectifs ménagés sur les bras (16). La partie supérieure de chaque bras (16) est muni d'au moins deux crans (24). Le crabot (22) possède au moins deux encoches (25) de réglage destinées à recevoir les deux pions (26) du chariot transversal (18).

Comme le montrent les figures 3, 5, 7 et 9, la partie supérieure du crabot (22), en forme de plaque, repose sur les bras ou rails (16), comporte une découpe oblongue (traversée par le fourreau (33) dans lequel est monté coaxialement l'arbre (13) autorisant un déplacement latéral de l'ensemble fourreau (33)/arbre (13) et forme surface de reprise d'efforts pour la rondelle d'appui (31).

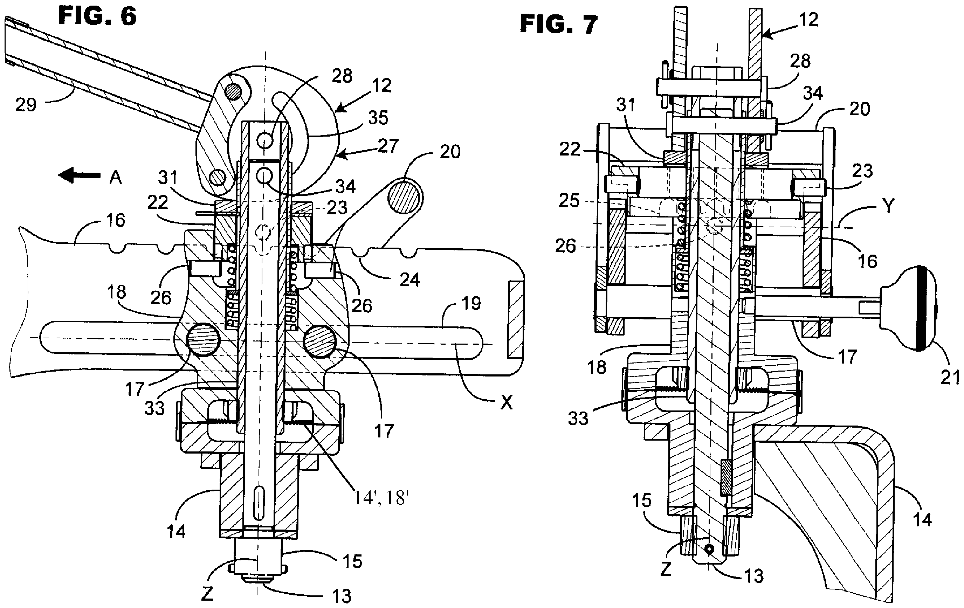

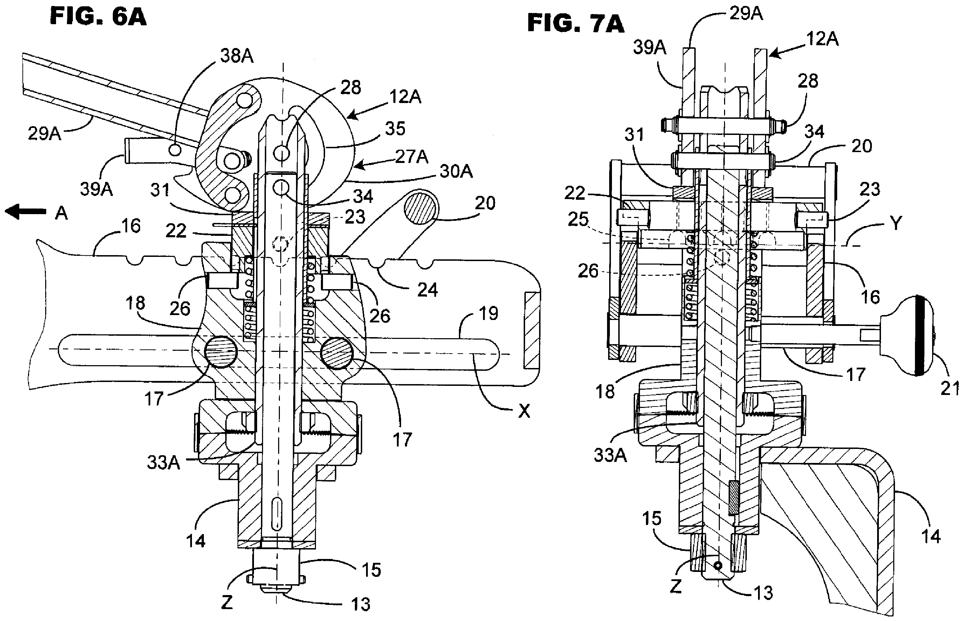

D'une manière avantageuse, le moyen de réglage (12) peut être placé dans deux positions, une position verrouillée ou de serrage (figures 4 et 5) et une position libre (figures 6 à 9) permettant d'effectuer un ou plusieurs réglages. A cet effet, le moyen de réglage (12) présente une came (27) qui est fixée sur l'arbre vertical (13) au moyen d'un axe monté transversalement dans cet arbre (13) et formant son axe de rotation (28). La came (27) est actionnée par un levier (29) pour passer d'une position verrouillée du moyen de réglage (12) à une position déverrouillée. Le profil extérieur (30) de la came (27) est réalisé en conséquence. Le profil extérieur (30) comporte un profil ou segment de profil droit et un profil ou segment de profil arrondi. Le profil arrondi dispose d'un rayon (cercle centré sur l'axe de rotation (28) ) inférieur à la distance entre l'axe de rotation (28) et le profil droit. Lorsque le profil droit de la came (27) est en contact avec la rondelle d'appui (31), le moyen de réglage (12) est dans sa position verrouillée (Figures 4 et 5). Le profil droit est par exemple un méplat. Le profil extérieur (30) glisse ou roule sur la rondelle d'appui (31) pour générer des mouvements permettant les réglages du dispositif déflecteur (4). Lorsque le profil arrondi de la came (27) est en contact avec la rondelle d'appui (31), le moyen de réglage (12) est dans sa position déverrouillée (en translation ou en rotation en fonction du segment de profil arrondi concerné et du sens de basculement du levier (29)). Le profil arrondi de la came (27) est réalisé pour que la course de serrage soit suffisante pour libérer les translations suivant l'axe longitudinal (X) et suivant l'axe transversal (Y) ainsi que la rotation suivant l'axe vertical (Z). Le réglage angulaire autour de (Z) du support (14) est avantageusement réalisé par rapport au chariot transversal (18) par une liaison à cannelures ou à dents mutuellement engrênées. La position en rotation du support (14) portant le dispositif déflecteur (4) est donné grâce à un montage sur l'arbre (13) via une clavette. Le levier (29) permet une intervention rapide pour ajuster la position du dispositif déflecteur (4) par rapport au dispositif de travail (3). Un tel levier à came permet un serrage rapide. L'utilisation d'un outil additionnel n'est pas nécessaire puisque la manipulation est directe sur le levier (29). Préférentiellement, et comme illustré sur les figures annexées, la came (27) est une came double avec deux corps de came identiques, arrangés de manière espacée et recevant entre eux le levier (29) auquel ils sont reliés rigidement. D'une manière avantageuse, le moyen de réglage (12) comporte également un ressort (32). Le ressort (32) est disposé entre le crabot (22) et le chariot transversal (18). Ce ressort (32) sollicite par conséquent le crabot (22) vers le haut, c'est-à-dire vers une position de désengagement des pions (23) et (26) et donc de déverrouillage des chariots (17 et 18), autorisant un réglage dans les directions longitudinale et transversale (X et Y) du dispositif déflecteur (4) concerné. Le verrouillage en translation, par engagement du crabot (22) sous l'action de la came (27) déplacée par le levier (29) se fait donc à l'encontre de cette sollicitation élastique. Avec un tel moyen de réglage (12) comportant un chariot longitudinal (17), un chariot transversal (18), un crabot (22), un ressort (32) et une came (27), la position du dispositif déflecteur (4) peut être aisément ajustée. Le crabot (22) est monté de manière à pouvoir être placé dans deux positions ou états, et c'est la position ou l'état du crabot (22) qui autorise ou empêche le réglage en translation.

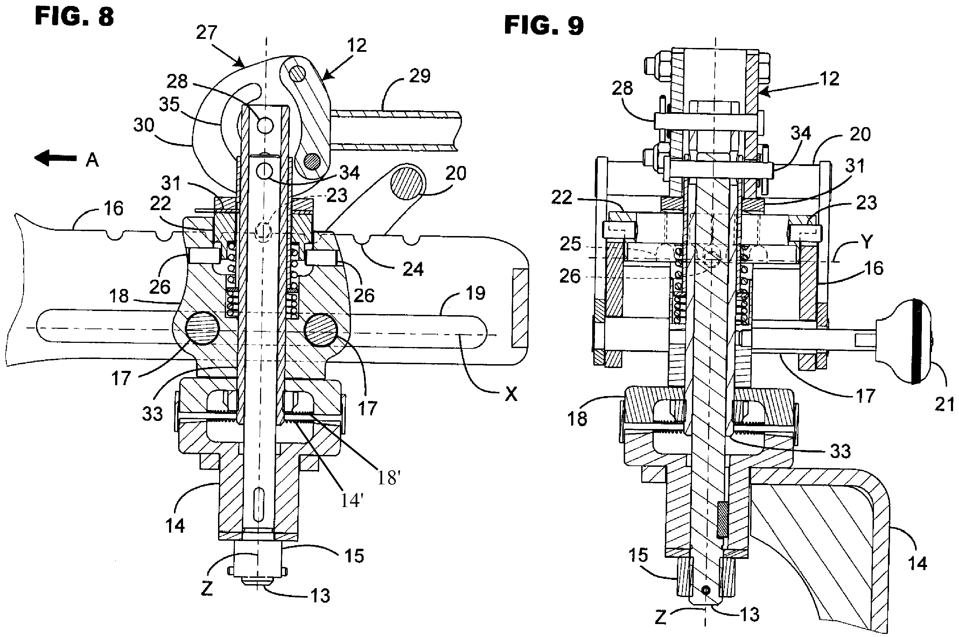

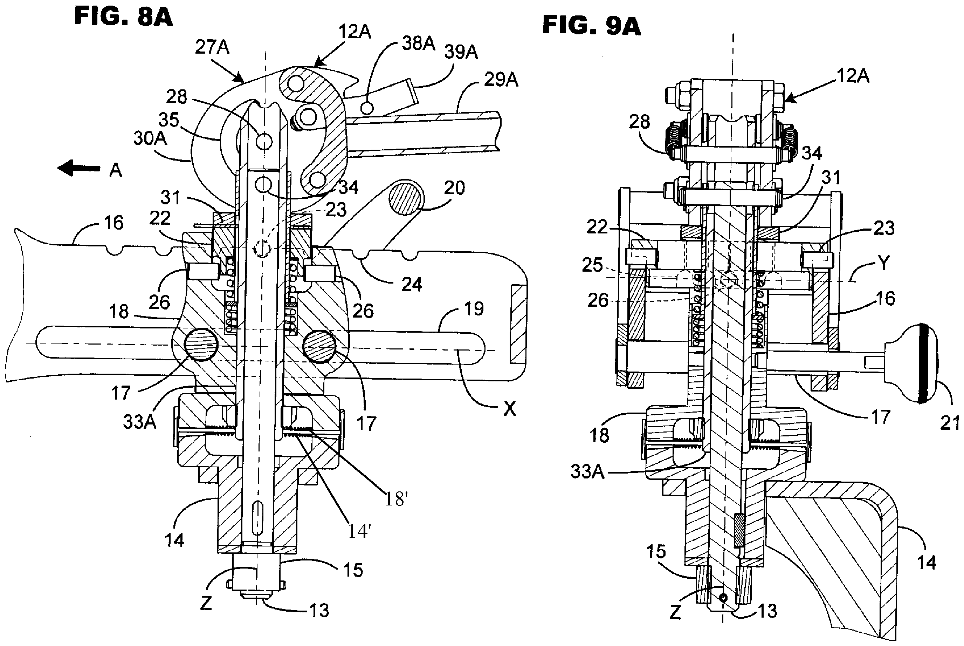

Selon une caractéristique importante de l'invention, le moyen de réglage (12) libère indépendamment les translations selon les axes (X, Y) et la rotation autour de l'axe vertical (Z). Ainsi, les réglages en translation et le réglage angulaire sont indépendants. En pratique, c'est la position du levier (29) par rapport au module de travail du sol (1) qui libère ou bloque la position du dispositif déflecteur (4). La position centrale du levier (29) correspondant à la position verrouillée illustrée sur les figures 4 et 5 (profil droit de la came (27) en appui sur la rondelle (31)). Lorsque le levier (29) est pivoté vers l'avant, tel que représenté sur les figures 6 et 7 (premier segment de profil arrondi en appui), les réglages en translation sont autorisés. Le réglage angulaire est possible lorsque le levier (29) est pivoté vers l'arrière, comme illustré sur les figures 8 et 9 (second segment de profil arrondi en appui). Une telle distinction, avec une libération sélective des verrouillages en position, limite le risque de déréglage involontaire (en translation ou en rotation) et permet d'intervenir uniquement sur le réglage (en translation ou en rotation) à effectuer. En pratique, l'utilisateur intervient plus fréquemment pour régler l'angle selon l'axe vertical (Z) dans le but de créer une butte plus ou moins haute et large. L'intervention est donc rapide et ciblée, et n'interfère pas avec les réglages en translation.

Comme le montrent les vues en coupe, l'arbre (13) est avantageusement logé dans un fourreau (33) et la came (27) est une double came. L'extrémité supérieure de l'arbre (13) est solidarisée sur le fourreau (33) au moyen d'un axe de guidage (34). La came (27) est solidarisée sur la partie supérieure du fourreau (33) au moyen de l'axe de rotation (28). La rondelle d'appui (31), le crabot (22) et le chariot transversal (18) sont montés sur le fourreau (33) et sont maintenus par un écrou. En plus du profil extérieur (30), la came (27) dispose d'un profil intérieur (35). L'axe de guidage (34) est destiné à se déplacer dans ce profil intérieur (35) sous forme de rainure.

Les figures 6 et 7 illustrent le moyen de réglage (12) dans une position déverrouillée qui autorise les réglages en translation suivant l'axe longitudinal (X) et l'axe transversal (Y). Le levier (29) a été pivoté vers l'avant pour libérer le crabot (22). Un réglage selon l'axe vertical (Z) n'est pas possible. Dans cette position, le crabot (22) est libéré sous l'effet du ressort (32) puisque le profil extérieur (30) de la came (27) permet de réduire la distance entre l'axe de rotation (28) et le crabot (22), dont la valeur minimale est imposée par la came (27). Les pions (23) et les pions (26) sont libérés de leur logement respectif (soulèvement autorisé du crabot (22) sous l'action du ressort (32).

Les figures 8 et 9 illustrent le moyen de réglage (12) dans une autre position déverrouillée autorisant le réglage en rotation autour de l'axe vertical (Z). Le levier (29) a été pivoté vers l'arrière pour désolidariser le chariot transversal (18) et le support (14) du dispositif déflecteur (4). Un réglage en translation selon les axes longitudinal et transversal (X et Y) n'est pas autorisé. Pour cela, le profil extérieur de la came (27) est tel que la distance entre le profil extérieur et l'axe de rotation (28) est sensiblement la même dans les positions verrouillée (levier (29) dirigé vers le haut - figures 4 et 5) et pivotée vers l'arrière du levier (29). Dans cette dernière position, seul le réglage en rotation est donc autorisé. Pour cela, le profil intérieur (35) de la came (27), dans lequel circule l'axe de guidage (34), est tel que la distance entre l'axe de rotation (28) et l'axe de guidage (34) est augmentée, lors du basculement du levier (29), et donc de la came (27), depuis sa position verrouillée (verticale) vers sa position orientée vers l'arrière (Fig. 8 et 9). Les cannelures supérieures (14') du support (14) pourront alors être positionnées différemment par rotation relative entre le support (14) et le chariot (18), par rapport aux cannelures inférieures (18') du chariot transversal (18). L'assemblage comporte aussi un ressort inférieur (36) dont la fonction est de supporter le poids du dispositif déflecteur (4) accroché à l'arbre (13).

Ce dernier, auquel le dispositif déflecteur (4) est fixé, prend appui sur le ressort inférieur (36) par l'intermédiaire d'une rondelle (40) montée sur l'extrémité inférieure d'une chemise tubulaire (40'), entourant l'ensemble fourreau (33)/arbre (13) et reliée à ces composants par l'axe de guidage (34).

Ainsi, le chariot transversal (18) et le support (14) présente des moyens d'engagement respectifs (18', 14') aptes et destinés à coopérer mutuellement pour les (14 et 18) assujettir en rotation autour de l'axe vertical (Z), le verrouillage et le déverrouillage desdits moyens d'engagement (18', 14') résultant d'un positionnement relatif différent (selon l'axe vertical (Z)) entre l'arbre (13) et le fourreau (33) déterminé par la position de l'organe de verrouillage/déverrouillage (27, 29 ; 27A, 29A).

Le déverrouillage du moyen de réglage (12) pour une modification de la position angulaire du dispositif déflecteur (4) autour de l'axe vertical (Z) est par conséquent obtenu en réalisant un déplacement vertical relatif entre l'arbre (13) et le fourreau (33), aboutissant à un désengagement mutuel des cannelures (14') et (18'). Le support (14), et donc le dispositif déflecteur (4) auquel il est relié, peut alors librement tourner autour de l'arbre (13) et de l'axe (Z).

Pour faciliter les réglages et permettre une répétabilité, le moyen de réglage (12) comporte un système d'indexation (37) multiple pour repérer la position du disque déflecteur (4) respectivement suivant l'axe longitudinal (X), l'axe transversal (Y) ou l'axe vertical (Z). L'indexage selon l'axe longitudinal (X) est prévu directement sur la partie supérieure des bras (16). Il s'agit d'une crémaillère disposant de plusieurs crans (24). Chaque cran (24) correspond à une position de réglage permettant d'avancer voire de reculer le dispositif déflecteur (4) par rapport au dispositif de travail (3). Le réglage transversal permet notamment d'approcher ou d'éloigner latéralement le dispositif déflecteur (4) du dispositif de travail (3). L'indexage selon l'axe transversal (Y) est réalisé grâce aux différentes encoches (25) réalisées sur le crabot (22). Dans l'exemple de réalisation des figures, la partie supérieure des bras (16) est muni de sept crans (24) et le crabot (22) possède cinq encoches (25). L'indexage selon l'axe vertical (Z) permet de repérer l'orientation du dispositif déflecteur (4) en fonction du dispositif de travail (3). L'indexage se fait via une platine graduée sur le crabot (22) et un indicateur de position fixé sur l'arbre (13).

Les figures 3A à 9A représentent une deuxième forme de réalisation d'un moyen de réglage (12A) selon la présente invention. Ce moyen de réglage (12A) comporte un certain nombre d'éléments qui ont été décrits précédemment. Ces éléments garderont par conséquent le même numéro de repère et ne seront pas décrits à nouveau. Il comporte également un certain nombre d'éléments qui sont comparables à des éléments du moyen de réglage (12) décrit précédemment. Ces éléments seront affectés du même numéro de repère que ces éléments comparables du moyen de réglage (12) suivi de la lettre A. Ils ne sont décrits ci-après que si cela s'avère nécessaire pour la compréhension de la deuxième forme de réalisation de l'invention. Le moyen de réglage (12A), selon cette deuxième forme de réalisation, est dans l'ensemble semblable à celui décrit auparavant. Les différences résident dans la forme du profil extérieur (30A) de la came (27A) et dans un levier (29A) comportant un verrou (38A). Le profil extérieur (30A) ne comporte qu'un profil arrondi, le profil droit a été supprimé par rapport au premier mode de réalisation. Le levier (29A) comporte un verrou (38A) permettant de bloquer la came (27A) dans au moins une position. Les figures 3A, 4A et 5A illustrent le moyen de réglage (12A) dans sa position verrouillée utilisée pour le travail. La position de la came (27A) est verrouillée grâce au verrou (38A) bloqué dans la partie supérieure du fourreau (33A). Le verrou (38A) est aligné avec l'axe de rotation (28) et l'axe de guidage (34). La partie supérieure du fourreau (33A) présente un évidement destiné à recevoir le verrou (38A). Une poignée à ressort (39A), qui est solidaire en rotation de la came (27A), permet de soulever et de libérer le verrou (38A) pour pouvoir manipuler le levier (29A). Grâce au profil extérieur arrondi de la came (27A), l'effort nécessaire pour actionner le levier (29A) est moindre et donc plus confortable à manipuler. Les figures 6A à 9A montrent la came (27A) dans ces deux positions permettant un réglage du dispositif déflecteur (4). Avant de pouvoir manipuler le levier (29A), il est nécessaire de déverrouiller le verrou (38A) en changeant l'état de la poignée à ressort (39A). Lorsque le verrou (38A) n'est pas aligné avec l'axe de rotation (28) et l'axe de guidage (34), le levier (29A) peut être manipulé.

Le moyen de réglage (12, 12A) selon l'invention peut être utilisé sur tout type de machines comportant un dispositif déflecteur (4) qui peut être réglé par rapport à un dispositif de travail (3) correspondant.

Chaque module de travail du sol (1) peut présenter un unique dispositif déflecteur (4)

Toutefois, en variante, et comme représenté aux figures 1 et 2, la structure support (2) du module (1) comporte avantageusement deux dispositifs déflecteurs (4), avec un dispositif déflecteur (4) s'étendant latéralement de chaque côté du dispositif de travail (3), chacun desdits dispositifs déflecteurs (4) étant pourvu d'un moyen de réglage (12 ; 12A).

De plus, chaque dispositif déflecteur (4) peut consister en un disque.

L'invention concerne également (figures 1 et 2) une machine de travail du sol comportant une poutre sur laquelle est fixé au moins un module de travail du sol (1) selon l'une quelconque des revendications 1 à 13.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Module de travail du sol (1) comportant une structure support (2), un dispositif de travail (3) monté sur la structure support (2) et au moins un dispositif déflecteur (4), ledit au moins un dispositif déflecteur (4) est monté sur la structure support (2) de manière déplaçable par rapport au dispositif de travail (3), un moyen de réglage (12, 12A) étant prévu pour régler ledit au moins un dispositif déflecteur (4), en translation suivant un axe transversal (Y) et en rotation autour d'un axe vertical (Z),
module de travail du sol (1) **caractérisé en ce que** le moyen de réglage (12, 12A) permet également de régler ledit au moins un dispositif déflecteur (4) en translation suivant un axe longitudinal (X) et **en ce que** le moyen de réglage (12, 12A) comprend un organe (27, 29 ; 27A, 29A) unique permettant de verrouiller respectivement de déverrouiller les translations suivant les axes longitudinal (X) et transversal (Y) ou la rotation suivant l'axe vertical (Z) dudit au moins un dispositif déflecteur (4).

2. Module de travail du sol selon la revendication 1, **caractérisé en ce que** l'organe de verrouillage/déverrouillage (27, 29 ; 27A, 29A) du moyen de réglage (12, 12A) est apte et destiné à libérer indépendamment les translations (X, Y) et la rotation autour de l'axe vertical (Z).

3. Module de travail du sol selon l'une quelconque des revendication 1 et 2, **caractérisé en ce que** le moyen de réglage (12, 12A) comprend plusieurs moyens de réglage élémentaires (14, 17, 18, 22) aptes et destinés chacun à permettre de réaliser au moins un réglage en translation selon l'un des axes longitudinal (X) et transversal (Y) ou en rotation autour de l'axe vertical (Z), et **en ce que** ledit moyen de réglage (12, 12A) comprend un unique organe (27, 29 ; 27A, 29A) assurant, de manière libérable, un verrouillage dans une position de réglage déterminée, en translation et en rotation, du dispositif déflecteur (4) concerné.

4. Module de travail du sol selon la revendication 3, **caractérisé en ce que** les différents moyens de réglage élémentaires (14, 17, 18, 22) sont intégrés dans une même unité structurelle et fonctionnelle laquelle assure un montage réglable du dispositif déflecteur (4) concerné sur la structure support (2), l'organe de verrouillage unique (29, 29A ; 27, 27A) associé à ladite unité étant apte et destiné à réaliser, d'une part, un verrouillage avec blocage en position du dispositif déflecteur (4) et, d'autre part, un déverrouillage sélectif d'au moins un desdits moyens de réglage élémentaires (14, 17, 18, 22), par simple déplacement dudit organe par l'utilisateur.

5. Module de travail du sol selon l'une quelconque des revendications 1 à 4, **caractérisé en ce que** ledit au moins un dispositif déflecteur (4) est monté sur un arbre vertical (13) définissant l'axe vertical (Z) de rotation et **en ce que** le moyen de réglage (12, 12A) comporte : i) un premier chariot (17) guidé en translation dans des bras (16) reliés rigidement à la structure support (2) et définissant l'axe de translation longitudinal (X), ii) un second chariot (18) logeant l'arbre (13) monté dans le chariot longitudinal (17) et apte à se déplacer transversalement par rapport à ce dernier, selon l'axe transversal (Y), iii) un crabot (22) permettant de positionner, avec verrouillage amovible, les premier et second chariots (17 et 18) respectivement selon l'axe longitudinal (X) et l'axe transversal (Y), et iiii) un support (14) portant le dispositif déflecteur (4), solidaire de l'extrémité inférieure de l'arbre vertical (13) et pouvant être sélectivement assujetti et libéré en rotation par rapport au chariot transversal (18), ces éléments (14, 17, 18, 22) formant des moyens de réglage élémentaires indépendants pouvant être sélectivement verrouillés et déverrouillés par un unique organe (27, 29 ; 27A, 29A) faisant également partie dudit moyen de réglage (12 ; 12A).

6. Module de travail du sol selon l'une quelconque des revendications 1 à 5, **caractérisé en ce que** le moyen de réglage (12, 12A) comporte un système d'indexation (37) pour repérer la position du dispositif déflecteur (4) associé suivant l'axe longitudinal (X), suivant l'axe transversal (Y) et autour de l'axe vertical (Z), ledit système d'indexation comprenant un moyen propre d'indexation discrète (23, 24 ; 25, 26 ; 14', 18') pour chaque possibilité de réglage en translation et en rotation dudit dispositif déflecteur (4).

7. Module de travail du sol selon l'une quelconque des revendications 1 à 6, **caractérisé en ce que** le moyen de réglage (12, 12A) comprend un organe de verrouillage/déverrouillage (27, 29 ; 27A, 29A) pivotant, apte et destiné à déterminer trois états pour ledit moyen de réglage (12, 12A), à savoir un état verrouillé et deux états de déverrouillage sélectif, ledit organe (27, 29 ; 27A, 29A) étant conçu de telle manière qu'il puisse, à partir d'une position centrale ou médiane de verrouillage du moyen de réglage (12, 12A), pivoter dans un sens pour autoriser les mouvements de translation et pivoter dans l'autre sens pour autoriser le mouvement de rotation.

8. Module de travail du sol selon les revendication 5 et 7 , **caractérisé en ce que** l'organe de verrouillage/déverrouillage (27, 29 ; 27A, 29A) consiste en un ensemble came (27, 27A)/levier (29, 29A), ladite came (27, 27A), avantageusement du type came double, étant, d'une part, montée à rotation par l'intermédiaire d'un axe (28) sur l'extrémité supérieure d'un fourreau (33A) entourant ledit arbre (13) et monté dans le chariot transversal (18), et, d'autre part, en appui glissant sur le crabot (22).

9. Module de travail du sol selon l'une quelconque des revendication 5 et 8, **caractérisé en ce que** le chariot transversal (18) et le support (14) présente des moyens d'engagement respectifs (18', 14') aptes et destinés à coopérer mutuellement pour les assujettir en rotation autour de l'axe vertical (Z), le verrouillage et le déverrouillage desdits moyens d'engagement (18', 14') résultant d'un positionnement relatif différent entre l'arbre (13) et le fourreau (33) déterminé par la position de l'organe de verrouillage/déverrouillage (27, 29 ; 27A, 29A).

10. Module de travail du sol selon l'une quelconque des revendications 1 à 9, **caractérisé en ce que** le moyen de réglage (12A) comporte un verrou (38A), apte et destiné à bloquer en position l'organe de verrouillage/déverrouillage (27, 29 ; 27A, 29A) du moyen de réglage (12 ; 12A), ce de manière amovible, préférentiellement à l'encontre d'une sollicitation élastique.

11. Module de travail du sol selon l'une quelconque des revendications 1 à 10, **caractérisé en ce que** la structure support (2) comporte deux dispositifs déflecteurs (4), avec un dispositif déflecteur (4) s'étendant latéralement de chaque côté du dispositif de travail (3), chacun desdits dispositifs déflecteurs (4) étant pourvu d'un moyen de réglage (12 ; 12A)

12. Module de travail du sol selon l'une quelconque des revendications 1 à 11, **caractérisé en ce que** le ou chaque dispositif déflecteur (4) consiste en un disque.

13. Machine de travail du sol comportant une poutre sur laquelle est fixé au moins un module de travail du sol (1) selon l'une quelconque des revendications 1 à 12.

## Patentansprüche

1. Bodenbearbeitungsmodul (1),
welches eine Stützstruktur (2), eine auf der Stützstruktur (2) montierte Bearbeitungseinrichtung (3) und mindestens eine Ablenkeinrichtung (4) aufweist, wobei die mindestens eine Ablenkeinrichtung (4) auf der Stützstruktur (2) in einer zur Bearbeitungseinrichtung (3) verschiebbaren Weise montiert ist,
wobei ein Verstellmittel (12, 12A) vorgesehen ist, um die mindestens eine Ablenkeinrichtung (4) mit einer einer transversalen Achse (Y) folgenden Translation und mit einer Rotation um eine vertikale Achse (Z) zu verstellen,
wobei das Bodenbearbeitungsmodul (1) **dadurch gekennzeichnet ist, dass** das Verstellmittel (12, 12A) es auch ermöglicht, die mindestens eine Ablenkeinrichtung (4) mit einer einer longitudinalen Achse (X) folgenden Translation zu verstellen, und
dass das Verstellmittel (12, 12A) ein einziges Element (27, 29; 27A, 29A) aufweist, welches ein Verriegeln beziehungsweise ein Entriegeln der der longitudinalen (X) und transversalen (Y) Achse folgenden Translationen oder der der vertikalen Achse (Z) folgenden Rotation der mindestens einen Ablenkeinrichtung (4) ermöglicht.

2. Bodenbearbeitungsmodul nach Anspruch 1,
**dadurch gekennzeichnet,**
**dass** das Verriegelungs-/Entriegelungselement (27, 29; 27A, 29A) des Verstellmittels (12, 12A) geeignet und dazu bestimmt ist, die Translationen (X, Y) und die Rotation um die vertikale Achse (Z) unabhängig voneinander freizugeben.

3. Bodenbearbeitungsmodul nach einem der Ansprüche 1 und 2,
**dadurch gekennzeichnet,**
**dass** das Verstellmittel (12, 12A) mehrere elementare Verstellmittel (14, 17, 18, 22) aufweist, wobei jedes geeignet und dazu bestimmt ist, es zu ermöglichen, mindestens ein Verstellen mit einer Translation entlang einer der longitudinalen (X) und transversalen (Y) Achse oder mit einer Rotation um die vertikale Achse (Z) zu verwirklichen, und
**dass** das Verstellmittel (12, 12A) ein einziges Element (27, 29; 27A, 29A) aufweist, welches in lösbarer Weise eine Verriegelung der betroffenen Ablenkeinrichtung (4) in einer mit einer Translation und mit einer Rotation bestimmten Verriegelungsposition sichert.

4. Bodenbearbeitungsmodul nach Anspruch 3,
**dadurch gekennzeichnet,**
**dass** die verschiedenen elementaren Verstellmittel (14, 17, 18, 22) in derselben strukturellen und funktionellen Einheit integriert sind, welche eine auf der Stützstruktur (2) verstellbare Montage der betroffenen Ablenkeinrichtung (4) sicherstellt,
wobei das einzige Verriegelungselement (29, 29A; 27, 27A), welches mit der Einheit assoziiert ist, geeignet und dazu bestimmt ist, um zum einen eine Verriegelung mit einer Blockierung in der Position der Ablenkeinrichtung (4) und zum anderen eine selektive Entriegelung von mindestens einem der elementaren Verstellmittel (14, 17, 18, 22) durch einfaches Verschieben des Elements durch den Bediener zu verwirklichen.

5. Bodenbearbeitungsmodul nach einem der Ansprüche 1 bis 4,
**dadurch gekennzeichnet,**
**dass** die mindestens eine Ablenkeinrichtung (4) auf einem vertikalen Bolzen (13) montiert ist, welcher die vertikale Rotationsachse (Z) definiert und
**dass** das Verstellmittel (12, 12A) aufweist:
i) einen ersten Schlitten (17), welcher translatorisch in Armen (16) geführt ist, welche fest mit der Stützstruktur (2) verbunden sind und die longitudinale Translationsachse (X) definieren,
ii) einen den Bolzen (13) aufnehmenden zweiten Schlitten (18), welcher in dem longitudinalen Schlitten (17) montiert ist und geeignet ist, sich transversal zu letzterem entlang der transversalen Achse (Y) zu verschieben,
iii) eine Kupplung (22), welche es mit der herausnehmbaren Verriegelung ermöglicht, den ersten und zweiten Schlitten (17 und 18) entlang der longitudinalen Achse (X) und der transversalen Achse (Y) entsprechend zu positionieren, und
iiii) eine die Ablenkeinrichtung (4) tragende Stütze (14), welche mit dem unteren Ende des vertikalen Bolzens (13) kraftschlüssig verbunden ist und mit einer Rotation zum transversalen Schlitten (18) wahlweise festgemacht und gelöst werden kann,
wobei diese Elemente (14, 17, 18, 22) unabhängige elementare Verstellmittel bilden, welche durch ein einziges Element (27, 29; 27A, 29A), welches auch Bestandteil des Verstellmittels (12; 12A) ist, wahlweise verriegelt und entriegelt werden können.

6. Bodenbearbeitungsmodul nach einem der Ansprüche 1 bis 5,
**dadurch gekennzeichnet,**
**dass** das Verstellmittel (12, 12A) ein Umschaltsystem (37) zum Auffinden der Position der zugeordneten Ablenkeinrichtung (4), der longitudinalen Achse (X) folgend, der transversalen Achse (Y) folgend und um die vertikale Achse (Z), aufweist,
wobei das Umschaltsystem ein eigenes diskretes Umschaltmittel (23, 24; 25, 26; 14', 18') für jede Verstellmöglichkeit mit einer Translation und mit einer Rotation der Ablenkeinrichtung (4) aufweist.

7. Bodenbearbeitungsmodul nach einem der Ansprüche 1 bis 6,
**dadurch gekennzeichnet,**
**dass** das Verstellmittel (12, 12A) ein schwenkbares Verriegelungs-/Entriegelungselement (27, 29; 27A, 29A) aufweist, welches geeignet ist und dazu bestimmt ist, drei Zustände für das Verstellmittel (12, 12A) festzulegen und zwar einen Verriegelungszustand und zwei selektive Entriegelungszustände, wobei das Element (27, 29; 27A, 29A) derart konstruiert ist, dass es von einer zentralen oder medialen Verriegelungsposition des Verriegelungsmittels (12, 12A) in eine Richtung verschwenkt werden kann, um die Translationsbewegungen zu erlauben und in die andere Richtung verschwenkt werden kann, um die Rotationsbewegung zu erlauben.

8. Bodenbearbeitungsmodul nach einem der Ansprüche 5 und 7,
**dadurch gekennzeichnet,**
**dass** das Verriegelungs-/Entriegelungselement (27, 29; 27A, 29A) aus einer Kurvenscheiben- (27, 27A)/Hebel- (29, 29A) Einheit besteht,
wobei die Kurvenscheibe (27, 27A) vorteilhafterweise vom Typ einer Doppelkurvenscheibe ist, welche einerseits mittels eines Zapfens (28) auf dem oberen Ende einer Hülse (33A), welche den Bolzen (13) umgibt, montiert ist und in dem transversalen Schlitten (18) montiert ist und andererseits gleitend auf der Kupplung (22) aufliegt.

9. Bodenbearbeitungsmodul nach einem der Ansprüche 5 und 8,
**dadurch gekennzeichnet,**
**dass** der transversale Schlitten (18) und die Stütze (14) jeweilige Eingriffsmittel (18', 14') darstellen, welche geeignet und dazu bestimmt sind, wechselseitig zu kooperieren, um sie mit einer Rotation um die vertikale Achse (Z) festzumachen, wobei das Verriegeln und das Entriegeln der Eingriffsmittel (18', 14') aus einer unterschiedlichen relativen Positionierung zwischen dem Bolzen (13) und der Hülse (33) entsteht, welche durch die Position des Verriegelungs-/Entriegelungselements (27, 29; 27A, 29A) festgelegt wird.

10. Bodenbearbeitungsmodul nach einem der Ansprüche 1 bis 9,
**dadurch gekennzeichnet,**
**dass** das Verstellmittel (12A) einen Riegel (38A) aufweist, welcher geeignet und dazu bestimmt ist, in einer Position des Verriegelungs-/Entriegelungselements (27, 29; 27A, 29A) des Verstellmittels (12; 12A) zu blockieren, dies in herausnehmbarer Weise, vorzugsweise im Gegensatz zu einer elastischen Beanspruchung.

11. Bodenbearbeitungsmodul nach einem der Ansprüche 1 bis 10,
**dadurch gekennzeichnet,**
**dass** die Stützstruktur (2) zwei Ablenkeinrichtungen (4) aufweist, mit einer Ablenkeinrichtung (4), welche sich lateral zu jeder Seite der Bearbeitungseinrichtung (3) erstreckt, wobei jede der Ablenkeinrichtungen (4) mit einem Verstellmittel (12; 12A) ausgestattet ist.

12. Bodenbearbeitungsmodul nach einem der Ansprüche 1 bis 11,
**dadurch gekennzeichnet,**
**dass** die oder jede Ablenkeinrichtung (4) aus einer Scheibe besteht.

13. Bodenbearbeitungsmaschine, welche einen Balken aufweist, auf dem mindestens ein Bodenbearbeitungsmodul (1) nach einem der Ansprüche 1 bis 12 angebracht ist.

## Claims

1. Soil tilling module (1) comprising a supporting structure (2), a tilling device (3) mounted on the supporting structure (2) and at least one deflecting device (4), said at least one deflecting device (4) being mounted on the supporting structure (2) in such a way as to be displaceable in relation to the tilling device (3), an adjusting means (12, 12A) being provided to adjust said at least one deflecting device (4), in translation in a transverse axis (Y) and in rotation about a vertical axis (Z), the soil tilling module (1) being **characterised in that** the adjusting means (12, 12A) also makes it possible to adjust said at least one deflecting device (4) in translation in a longitudinal axis (X), and **in that** the adjusting means (12., 12A) comprises a single member (27, 29; 27A, 29A) which makes it possible to lock and respectively unlock the translations in the longitudinal axis (X) and the transverse axis (Y) or the rotation in the vertical axis (Z) of said at least one deflecting device (4).

2. Soil tilling module according to claim 1, **characterised in that** the locking/unlocking member (27, 29; 27A, 29A) of the adjusting means (12, 12A) is able and designed to independently release the translations (X, Y) and the rotation about the vertical axis (Z).

3. Soil tilling module according to any one of claims 1 and 2, **characterised in that** the adjusting means (12, 12A) comprises a plurality of elementary adjusting means (14, 17, 18, 22) which are each able and designed to make it possible to produce at least one adjustment in translation in one of the longitudinal axis (X) and the transverse axis (Y) or in rotation about the vertical axis (Z), and **in that** said adjusting means (12, 12A) comprises a single member (27, 29; 27A, 29A) effecting releasable locking in a given adjustment position in translation and in rotation of the deflecting device (4) concerned.

4. Soil tilling module according to claim 3, **characterised in that** the different elementary adjusting means (14, 17, 18, 22) are integrated in a same structural and functional unit which effects adjustable mounting of the deflecting device (4) concerned on the supporting structure (2), the single locking member (29, 29A; 27, 27A) associated with said unit being able and designed to effect firstly locking with immobilisation in position of the deflecting device (4) and secondly selective unlocking of at least one of said elementary adjusting means (14, 17, 18, 22) by simple movement of said member by the user.

5. Soil tilling module according to any one of claims 1 to 4, **characterised in that** said at least one deflecting device (4) is mounted on a vertical shaft (13) defining the vertical axis of rotation (Z) and **in that** the adjusting means (12, 12A) comprises: i) a first carrier (17) guided in translation in arms (16) connected rigidly to the supporting structure (2) and defining the longitudinal axis of translation (X), ii) a second carrier (18) housing the shaft (13) mounted in the longitudinal carrier (17) and able to move transversely in relation to the latter, in the transverse axis (Y), iii) a dog clutch (22) which makes it possible to position the first and second carriers (17 and 18) respectively with releasable locking in the longitudinal axis (X) and the transverse axis (Y), and iiii) a support (14) carrying the deflecting device (4), integral with the lower end of the vertical shaft (13) and capable of being selectively secured and released in rotation in relation to the transverse carrier (18), these elements (14, 17, 18, 22) forming independent elementary adjusting means which can be selectively locked and unlocked by a single member (27, 29; 27A, 29A) also forming part of said adjusting means (12; 12A).

6. Soil tilling module according to any one of claims 1 to 5, **characterised in that** the adjusting means (12, 12A) comprises an indexing system (37) for marking the position of the associated deflecting device (4) in the longitudinal axis (X), in the transverse axis (Y) and about the vertical axis (Z), said indexing system comprising its own particular discrete indexing means (23, 24; 25, 26; 14', 18') for each possible adjustment in translation and in rotation of said deflecting device (4).

7. Soil tilling module according to any one of claims 1 to 6, **characterised in that** the adjusting means (12, 12A) comprises a pivoting locking/unlocking member (27, 29; 27A, 29A) which is able and designed to determine three states for said adjusting means (12, 12A), namely a locked state and two selective unlocked states, said member (27, 29; 27A, 29A) being designed in such a way that it is able to pivot from a central or median locking position of the adjusting means (12, 12A) in one direction to allow the translation movements and in the other direction to allow the rotation movement.

8. Soil tilling module according to claims 5 and 7, **characterised in that** the locking/unlocking member (27, 29; 27A, 29A) comprises a cam (27, 27A) and lever (29, 29A) assembly, said cam (27, 27A) advantageously of the double cam type, being, on the one hand, mounted so as to be rotatable through the intermediary of a pivot (28) on the upper end of a sleeve (33A) surrounding said shaft (13) and mounted in the transverse carrier (18), and, on the other hand, bearing slidingly on the dog clutch (22).

9. Soil tilling module according to any one of claims 5 and 8, **characterised in that** the transverse carrier (18) and the support (14) have respective engagement means (18', 14') which are able and designed to cooperate with one another to secure them in rotation about the vertical axis (Z), the locking and the unlocking of said engagement means (18', 14') resulting from a different relative positioning between the shaft (13) and the sleeve (33) determined by the position of the locking/unlocking member (27, 29; 27A, 29A).

10. Soil tilling module according to any one of claims 1 to 9, **characterised in that** the adjusting means (12A) comprises a bolt (38A) which is able and designed to immobilise the locking/unlocking member (27, 29; 27A, 29A) of the adjusting means (12; 12A) in position, releasably, preferably against an elastic biasing force.

11. Soil tilling module according to any one of claims 1 to 10, **characterised in that** the supporting structure (2) comprises two deflecting devices (4), with one deflecting device (4) extending laterally on each side of the tilling device (3), each of said deflecting devices (4) being provided with an adjusting means (12; 12A).

12. Soil tilling module according to any one of claims 1 to 11, **characterised in that** the or each deflecting device (4) comprises a disk.

13. Soil tilling machine comprising a beam on which is fixed at least one soil tilling module (1) according to any one of claims 1 to 12.
